# Europäisches Patentamt

## European Patent Office

## Office européen des brevets

(11) Veröffentlichungsnummer: **0 163 879**
**A1**

(12) # EUROPÄISCHE PATENTANMELDUNG

(21) Anmeldenummer: 85104709.2

(22) Anmeldetag: 18.04.85

(51) Int. Cl.⁴: **D 06 F 39/10, D 06 F 43/00**

(30) Priorität: 07.05.84 DE 3416738
21.05.84 DE 3418836

(43) Veröffentlichungstag der Anmeldung: 11.12.85
Patentblatt 85/50

(84) Benannte Vertragsstaaten: FR GB IT NL

(71) Anmelder: Multimatic Maschinen GmbH. & Co.,
Bismarckstrasse 4-10, D-4520 Melle (DE)

(72) Erfinder: Kötter, Gustav, Meller Berg 44,
D-4520 Melle 1 (DE)
Erfinder: Mutschelknaus, Peter, Dipl.-Ing.,
Mühlenstrasse 6, D-4520 Melle (DE)

(74) Vertreter: Lorenz, Eduard et al, Rechtsanwälte Eduard
Lorenz - Bernhard Seidler Margrit Seidler - Dipl.-Ing.
Hans-K. Gossel Dr. Ina Philipps - Dr. Paul B. Schäuble Dr.
Siegfried Jackermeier,
Widenmayerstrasse 23 D-8000 München 22 (DE)

(54) **Flusenfilter einer Chemischreinigungsmaschine.**

(57) Ein Flusenfilter, der in ein Trocknungsluft führendes Rohr einer Chemischreinigungsmaschine eingebaut ist, besteht aus einem in einem Filtergehäuse befestigten, sich über den Durchtrittsquerschnitt erstreckenden feinmaschigen Sieb. Um diesen Flusenfilter schnell und einfach und ohne Betriebsunterbrechungen reinigen zu können, ist das Sieb (3) derart zylindrisch gekrümmt, daß dessen Anströmseite konkav ist. Um eine im Bereich der Krümmungsachse des Siebes (3) angeordnete Schwenkachse (4) ist ein mit einem Schwenkantrieb (7) versehener Hebel gelagert, der an seinem freien Ende eine sich etwa über die Siebbreite erstreckende Saugdüse (6) trägt, die über die konkave Siebseite im geringen Abstand von dieser bewegbar ist. Die Saugdüse (6) ist über einen Schlauch (13) und gegebenenfalls Rohre unter Zwischenschaltung eines einen herausnehmbaren Filter (17) enthaltenden Gehäuses (16) mit einer Saugluftquelle (18) verbunden.

ACTORUM AG

Ü163879

21.05.1984
79 563  G-die

**Multimatic Maschinen GmbH & Co.,**
**4520 Melle**

---

**Flusenfilter einer Chemischreinigungsmaschine**

---

Die Erfindung betrifft einen Flusenfilter, der in ein Trocknungsluft führendes Rohr einer Chemischreinigungsmaschine eingebaut
ist, mit einem in einem Filtergehäuse befestigten, sich über den
Durchtrittsquerschnitt erstreckenden feinmaschigen Sieb, vorzugsweise einer Gaze.

Nach dem Waschvorgang wird die in der Waschtrommel befindliche,
gereinigte Ware einem starken Trocknungsluftstrom zum Abdunsten
der Lösemittel ausgesetzt. In dem Trocknungsluftstrom muß hinter
der Waschtrommel zum Schutz weiterer Anlagenteile, insbesondere der Kühleinrichtungen zum Auskondensieren des abgedunsteten Löse
mittels und der Heizeinrichtungen, ein Flusenfilter angeordnet
werden, der die in großer Menge anfallenden Flusen und dergleichen auffängt.

Bisher war es üblich, den Filter zum Zwecke seiner Reinigung
aus dem Filtergehäuse herauszuziehen und nach seiner Reinigung
wieder einzusetzen. Diese Art der Reinigung des Flusenfilters
ist nicht nur umständlich und aufwendig, sie muß auch während
der Wasch- oder Füllzeiten zwischen den Trocknungsphasen durchgeführt werden, um Betriebsunterbrechungen zu vermeiden.

Aufgabe der Erfindung ist es daher, einen Flusenfilter der eingangs angegebenen Art zu schaffen, der sich einfach und schnell
betätigen läßt, ohne Betriebsunterbrechungen zu verursachen.

Erfindungsgemäß wird diese Aufgabe dadurch gelöst, daß das Sieb
derart zylindrisch gekrümmt ist, daß dessen Anströmseite konkav
ist, daß um eine im Bereich der Krümmungsachse des Siebes angeordnete Schwenkachse ein mit einem Schwenkantrieb versehener
Hebel gelagert ist, der an seinem freien Ende eine sich etwa
über die Siebbreite erstreckende Saugdüse trägt, die über die
konkave Siebseite im geringen Abstand von dieser bewegbar ist,
und daß die Saugdüse über einen Schlauch und gegebenenfalls
Rohre unter Zwischenschaltung eines einen herausnehmbaren Filter
enthaltenden Gehäuses mit einer Saugluftquelle verbunden ist.

Die erfindungsgemäße Reinigungsvorrichtung für den Flusenfilter
läßt sich nach Bedarf und zweckmäßigerweise durch die Programmsteuerung der Chemischreinigungsmaschine während jedes Trocknungsvorgangs betätigen, so daß es für die Trocknungsluft gut
durchlässig bleibt und dem Luftstrom nur einen geringen Widerstand entgegensetzt. Damit ist die Wirksamkeit und Leistungsfähigkeit des Trocknungskreislaufes gewährleistet, ohne die Leistung der die Trocknungsluft bewegenden Gebläse erhöhen zu
müssen.

Die von dem Flusenfilter abgesaugten Flusen und dergleichen
werden in einem Filter gesammelt, der außerhalb des Trocknungsluftstromes in dem Saugluftkreislauf angeordnet ist. Das diesen
Filter enthaltende Gehäuse läßt sich einfach zur Entnahme des
Filters öffnen, der sich in einfacher Weise reinigen läßt oder
auch als Einmal-Filter ausgebildet sein kann, der nach seiner
Füllung weggeworfen und durch einen neuen ersetzt wird.

Der Schwenkantrieb des die Saugdüse verschwenkenden Hebels besteht zweckmäßigerweise aus einer um die Querachse eines Zylinders drehbar gelagerten Scheibe, die an gegenüberliegenden Enden
mit Kulissenführungen versehen ist, in denen die Gleitsteine
zweier in dem Zylinder durch Druckluft gegenläufig bewegbarer
Kolben geführt sind. Derartige Schwenkantriebe befinden sich
unter der Bezeichnung "Rotadisk" im Handel.

Weitere vorteilhafte Ausgestaltungen der Erfindung sind Gegenstand der Unteransprüche.

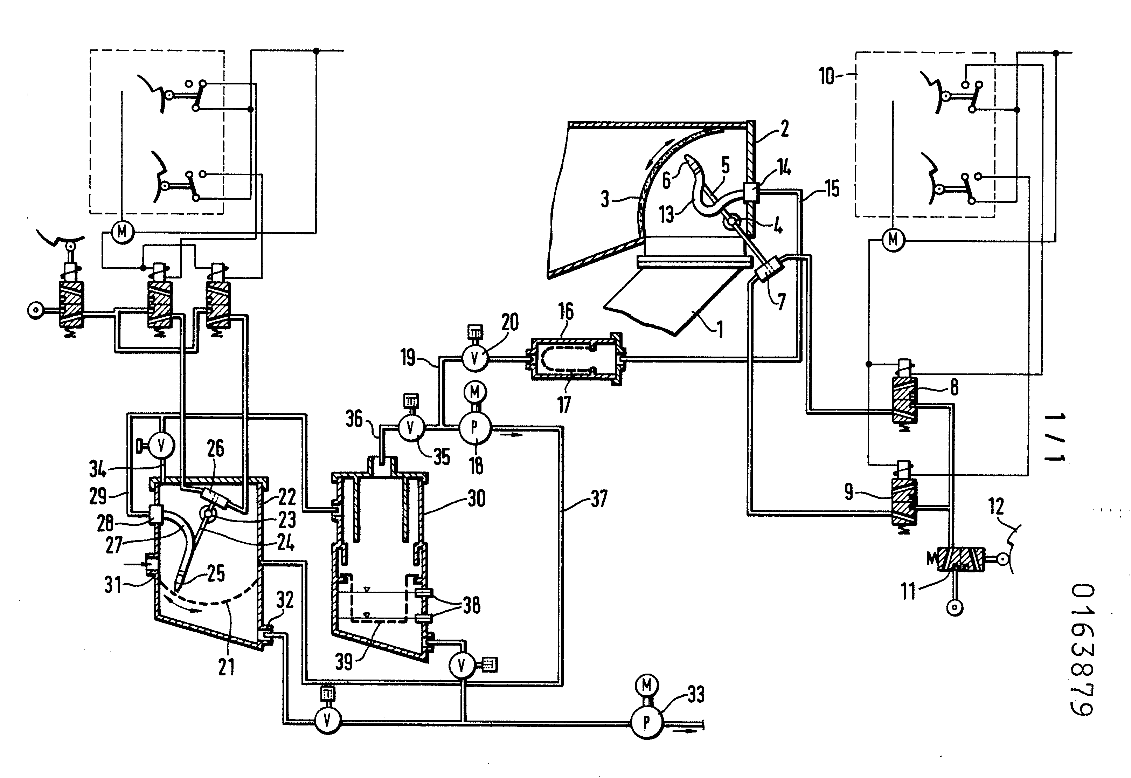

Ein Ausführungsbeispiel der Erfindung wird nachstehend anhand
der Zeichnung, in deren einziger Figur die Reinigungsvorrichtungen für den Flusenfilter und den Nadelfänger schematisch dargestellt sind, näher erläutert.

In der die Trocknungsluft führenden Leitung 1 einer Chemischreinigungsmaschine, die die mit Lösemitteldampf, Flusen oder
dergleichen beladene Trocknungsluft zu den Einrichtungen zur
Rückgewinnung des Lösemittels und zum Erwärmen führt, ist das
Gehäuse 2 angeordnet, das den Flusenfilter 3 enthält. Der Flusenfilter 3 ist in dem Filtergehäuse 2 herausnehmbar befestigt

0163879

und besteht aus einer Edelstahlgaze mit einer Maschenweite von
30 μm. Der Flusenfilter 3 deckt den Gehäusequerschnitt vollständig ab und ist etwa über einen Viertelkreis um die Schwenkachse 4 des Hebels 5 zylindrisch gewölbt. Der Hebel 5 trägt an
seinem freien Ende eine aus einer Breitschlitzdüse bestehende
Saugdüse 6. Diese Saugdüse läßt sich durch Verschwenken des
Hebels 5 durch einen Schwenkantrieb 7 in geringem Abstand über
die konkave Seite des zylindrisch gewölbten Flusenfilters 3
bewegen.

Der Schwenkantrieb 7 verdreht eine in der Schwenkachse 4 gelager
te Welle, auf die der Hebel 5 befestigt ist. Der Schwenkantrieb
7 besteht aus einem pneumatischen Kolbentrieb, der vereinfacht
durch eine an einem den Hebel 5 verlängernden Hebel angreifende
Kolbenzylindereinheit dargestellt ist.

Zur Beaufschlagung der jeweiligen Seite der Druckmittelkolbenzylindereinheit mit Druckluft sind 3/2-Wegeventile 8, 9 vorgesehen, die als Magnetventile ausgebildet sind und von dem Programmwalzengeber 10 der Chemischreinigungsmaschine gesteuert
werden. Die Steuerung kann selbstverständlich auch per Programm
durch einen Mikroprozessor erfolgen. Die Druckluft wird den
Magnetventilen 8, 9 über das 3/2-Wegeventil 11 zugeführt, das
ebenfalls durch eine Steuerwalze 12 betätigt wird.

Die Saugluftdüse 6 ist durch einen flexiblen Schlauch 13 mit
einem Anschlußstutzen 14 verbunden, der in einem Deckel des
Gehäuses 2 angeordnet ist. Von dem Anschlußstutzen 14 führt eine
Saugleitung 15 zu dem zylindrischen Gehäuse 16, in dem ein Filtersack 17 gehaltert ist. Dieser Filtersack 17 läßt sich durch
Abnehmen des Deckels von dem Gehäuse 16 herausnehmen, reinigen
oder durch einen neuen ersetzen.

Das andere Ende des Filtersackgehäuses 16 ist mit der Saugseite
der Saugpumpe 18 verbunden. In der Saugleitung 19 zwischen dem
Gehäuse 16 und der Saugpumpe 18 ist das Ventil 20 angeordnet,
mit dem sich die Saugleitung 19 schließen und die Saugdüse 6 von
der Saugpumpe 18 trennen läßt.

21.05.1984
79 563  G-die

Multimatic Maschinen GmbH & Co.,
4520 Melle

---

Flusenfilter einer Chemischreinigungsmaschine

---

**Patentansprüche:**

1.  Flusenfilter, der in ein Trocknungsluft führendes Rohr
    einer Chemischreinigungsmaschine eingebaut ist, mit einem
    in einem Filtergehäuse befestigten, sich über den Durch-
    trittsquerschnitt erstreckenden feinmaschigen Sieb, vorzugs-
    weise einer Gaze, **dadurch gekennzeichnet,** daß das Sieb
    (3) derart zylindrisch gekrümmt ist, daß dessen Anströmseite konkav ist, daß um eine im Bereich der Krümmungsachse
    des Siebes (3) angeordnete Schwenkachse (4) ein mit einem
    Schwenkantrieb (7) versehener Hebel (5) gelagert ist, der

- 2 -                    0163879

an seinem freien Ende eine sich etwa über die Siebbreite
erstreckende Saugdüse (6) trägt, die über die konkave Siebseite im geringen Abstand von dieser bewegbar ist, und daß
die Saugdüse (6) über einen Schlauch (13) und gegebenenfalls Rohre unter Zwischenschaltung eines einen herausnehmbaren Filter (17) enthaltenden Gehäuses (16) mit einer
Saugluftquelle (18) verbunden ist.


2.  Flusenfilter nach Anspruch 1, dadurch gekennzeichnet, daß
    der Schwenkantrieb des die Saugdüse (6) verschwenkenden
    Hebels (5) aus einer um die Querachse eines Zylinders drehbar gelagerten Scheibe besteht, die an gegenüberliegenden
    Enden mit Kulissenführungen versehen ist, in denen die
    Gleitsteine zweier in dem Zylinder durch Druckluft gegenläufig bewegbarer Kolben geführt sind.


3.  Flusenfilter nach Anspruch 1 oder 2, dadurch gekennzeichnet, daß die Saugdüse (6) aus einer Breitschlitzdüse besteht.


4.  Flusenfilter nach einem der Ansprüche 1 bis 3, dadurch
    gekennzeichnet, daß die Saugdüse (6) mit einem Saugstutzen
    (14) der Gehäusewand durch einen Schlauch (13) verbunden
    ist.

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| | **EINSCHLÄGIGE DOKUMENTE** | | EP 85104709.2 |
| A | <u>DE - A - 2 141 070</u> (BÖWE, BÖHLER & WEBER KG) <br> * Gesamt * <br><br> --- | | D 06 F 39/10 <br> D 06 F 43/00 |
| A | <u>DE - A - 2 141 069</u> (BÖWE, BÖHLER & WEBER KG) <br> * Gesamt * <br><br> -- | | |
| A | <u>DE - A - 1 410 944</u> (HANS F. ARENDT MASCHINENBAU) <br> * Gesamt * <br><br> -- | | |
| A | <u>DE - A - 1 957 844</u> (MEYER, ARNFRIED) <br> * Gesamt * <br><br> ---- | | |
| | | | **RECHERCHIERTE SACHGEBIETE (Int. Cl.4)** <br><br> D 06 F 39/10 <br> D 06 F 43/00 <br> D 06 F 58/00 |

Der vorliegende Recherchenbericht wurde für alle Patentansprüche erstellt.

| Recherchenort | Abschlußdatum der Recherche | Prüfer |
|---|---|---|
| WIEN | 25-07-1985 | KAMMERER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82